# Europäisches Patentamt
# European Patent Office
# Office européen des brevets

(11) Veröffentlichungsnummer: **0 150 485 B1**

(12) **EUROPÄISCHE PATENTSCHRIFT**

(45) Veröffentlichungstag der Patentschrift:
20.04.88

(51) Int. Cl.⁴: **B 01 D 53/34**

(21) Anmeldenummer: **84116194.6**

(22) Anmeldetag: **22.12.84**

(54) **Verfahren zur Umwandlung von in Verbrennungsabgasen enthaltenen Stickstoffoxyden.**

(30) Priorität: **27.01.84 DE 3402771**

(43) Veröffentlichungstag der Anmeldung:
**07.08.85 Patentblatt 85/32**

(45) Bekanntmachung des Hinweises auf die Patenterteilung:
**20.04.88 Patentblatt 88/16**

(84) Benannte Vertragsstaaten:
**DE FR GB NL**

(56) Entgegenhaltungen:
**DE - A - 2 802 194**
**DE - A - 3 020 301**
**DE - B - 2 756 186**
**US - A - 4 416 748**

(73) Patentinhaber: **Ruhrgas Aktiengesellschaft,
Huttropstrasse 60 Postfach 10 32 52,
D-4300 Essen 1 (DE)**

(72) Erfinder: **Pfeiffer, Roland Dr.rer.nat.,
Bonnenbergstrasse 11, D-4300 Essen 15 (DE)**

(74) Vertreter: **Zenz, Joachim Klaus, Dipl.-Ing. et al, ZENZ &
HELBER Patentanwälte Am Ruhrstein 1,
D-4300 Essen 1 (DE)**

## Beschreibung

Die Erfindung betrifft ein nicht-katalytisches Verfahren zur Umwandlung der in den Abgasen von Verbrennungsprozessen enthaltenen Stickstoffoxide (NO$_x$) in unschädliche Abgasbestandteile, wobei die Abgase mit einem Reduktionsmittel, vorzugsweise Ammoniak (NH$_3$), in einer Reaktionskammer gemischt werden und das Reduktionsmittel durch Zufuhr von Energie auf ein höheres Reaktionsniveau gebracht wird.

In den bei Verbrennungsprozessen entstehenden Abgasen sind unter anderem auch Stickstoffoxide (NO$_x$), insbesondere Stickoxid (NO) und Stickstoffdioxid (NO$_2$) enthalten, welche als Umweltgifte gelten bzw. neben ihrer Geruchsbelästigung auch toxische Wirkungen auf den menschlichen und tierischen Organismus entfalten können. Bekanntlich ist die Zersetzung solcher Stickstoffoxide (NO$_x$) durch Reaktion mit einem Reduktionsmittel, z.B. Ammoniak (NH$_3$), unter Bildung umweltfreundlicher Produkte (z.B. N$_2$ und H$_2$O) relativ träge. Daher wurde die Reaktion von stickstoffhaltigen Abgasen mit Ammoniak bisher vorwiegend in Anwesenheit eines Katalysators durchgeführt, um eine angemessene Reaktionsgeschwindigkeit zu erreichen.

Aus der DE-A-2 802 194 ist ein solches katalytisches Reduktionsverfahren bekannt, bei dem zur Verstärkung der Katalysatorwirkung und damit zur Erhöhung der katalytischen Reaktionsgeschwindigkeit der Reagentien das Reduktionsmittel Ammoniak elektromagnetischer Strahlung oder ultraviolettem Licht einer Wellenlänge von etwa 230 nm ausgesetzt wird. Die UV-Bestrahlung kann entweder während des Einführens von Ammoniak und NO$_x$-haltigem Abgas erfolgen, worauf das Gemisch in die den Katalysator enthaltende Reaktionskammer eingeleitet wird. Die zur katalytischen Reduktion erforderlichen Katalysatoren erhöhen zwangsläufig den für den Durchtritt der Abgase erforderlichen Querschnitt. Sie neigen zu Verschmutzungen während des Betriebs durch in den Verbrennungsabgasen enthaltene, anbackende Teilchen, welche den Durchsatzquerschnitt verringern und die Katalysatorwirkung verschlechtern. Darüber hinaus kann es auch zu einer Verschlechterung der Katalysatorwirkung und damit eine Abnahme der Reduktionsgeschwindigkeit kommen, wenn in den Brennstoffen Katalysatorgifte enthalten sind, welche über die Abgase in die Katalysatoren eingebracht werden.

Bekannt sind auch nicht-katalytische Verfahren der eingangs genannten Art zur Umwandlung von Stickstoffoxiden in Abgasen. Gemäss US-A-4 416 748 und DE-B-2 756 186 werden die mit Ammoniak (NH$_3$) gemischten Abgase mit ultraviolettem Licht bestrahlt, um so die Dissoziation der Stickstoffoxide zu induzieren. Gemäss der DE-A-3 020 301 wird das Gemisch aus Abgas und Ammoniak durch ein Fenster einer Reaktionskammer einer Elektronenstrahlung ausgesetzt, um die kleinen Mengen von giftigen Gaskomponenten in Aerosol umzuwandeln. Anschliessend durchläuft das Abgas einen Staubsammler, in welchem das Aerosol elektrostatisch abgeschieden wird.

Allen diesen bekannten nicht-katalytischen Verfahren ist gemeinsam, dass die Zufuhr von Energie zum Abgasstrom nach dessen Mischen mit dem Ammoniak erfolgt. Eine mit katalytischen Verfahren vergleichbare Reaktionsgeschwindigkeit lässt sich mit diesen bekannten nicht-katalytischen Verfahren nur bei erheblichem Energieeinsatz und apparativem Aufbau erreichen.

Der Erfindung liegt die Aufgabe zugrunde, dass nicht-katalytische Verfahren der eingangs genannten Art so zu verbessern, dass die erforderliche Reaktionsgeschwindigkeit bei der Umwandlung der in den Abgasen von Verbrennungsprozessen enthaltenen Stickstoffoxide mit relativ geringer Energiezufuhr und entsprechend minimierten apparativen und betriebsmässigen Aufbau erreicht wird.

Bei der Lösung dieser Aufgabe geht die Erfindung von der Überlegung aus, dass für die Erhöhung der Reaktionsgeschwindigkeit beim Umsetzen der Stickstoffoxide die energetische Aktivierung des Reduktionsmittels (NH$_3$) notwendig ist und der erhebliche Energiebedarf der bekannten nicht-katalytischen Verfahren darauf beruht, dass die dem Abgasstrom zugeführte Energie überwiegend die Moleküle des Abgases und nicht diejenige des Ammoniaks trifft.

Die Lösung der Erfindungsaufgabe besteht daher darin, dass die Energie auf die Moleküle des Reduktionsmittels zur Einwirkung gebracht wird, bevor das Reduktionsmittel mit Abgas gemischt wird. Die dazu erforderliche Energiezufuhreinrichtung kann mit entsprechend geringer Leistung betrieben und somit unter verringertem Investitionsaufwand hergestellt werden, zumal die Behandlungsquerschnitte bei der Beschränkung der Energiezufuhr auf den Reduktionsmittelstrom im Vergleich zum Abgasstrom nach der Gemischbildung relativ klein sind.

Vorzugsweise wird die Energie unmittelbar vor der Einführung des Reduktionsmittels in die Reaktionskammer auf die Moleküle des Reduktionsmittels zur Einwirkung gebracht. Dadurch werden Energieverluste vor dem Eintritt des Reduktionsmittels in die Reaktionskammer weitgehend vermieden.

Das Reduktionsmittel kann in gasförmigem oder flüssigem Aggregatzustand vorliegen.

Als Reduktionsmittel wird vorzugsweise Ammoniak (NH$_3$) verwendet, das auch in Wasser gelöst sein kann. Es können jedoch auch Synthesegas (CO + H$_2$), Methan (CH$_4$), höhere Kohlenwasserstoffe, z.B. LPG (verflüssigtes Erdölgas) oder deren Gemische zur Anwendung gelangen.

Die Zufuhr von Energie kann beispielsweise so erfolgen, dass die Moleküle des Reduktionsmittels einem elektrischen, elektromagnetischen oder induktiven Feld, und zwar vorteilhaft einem hochfrequenten Wechselfeld ausgesetzt werden. In Betracht kommt auch Energiezufuhr in Form von Wärmestrahlung, Konvektion o.ä..

Besonders vorteilhaft ist jedoch eine Verfahrensweise, bei der die Zufuhr von Energie durch Bestrahlung erfolgt, und zwar insbesondere durch Bestrahlung mittels von wenigstens einem Laser emittiertem kohärentem Licht (Laserbestrahlung). Dabei kommt sowohl eine Bestrahlung mittels gepulster Feststoff- als auch kontinuierlicher Gas-Laser in Frage.

Andererseits können die Bestrahlungen auch mittels ionisierender Strahlung, z.B. mit Röntgenstrahlern oder anderen radioaktiven Strahlenquellen erfolgen.

Um sicherzustellen, dass möglichst das gesamte zuzuführende Reduktionsmittel für die Umwandlung nutzbar gemacht wird, wird die Strahlung zweckmässig grossflächig verteilt auf den der Reaktionskammer zuzuführenden Strom von Reduktionsmitteln zur Einwirkung gebracht.

Das erfindungsgemässe Verfahren erlaubt eine optimale Steuerung derart, dass im wesentlichen die gesamten Stickstoffoxide ebenso wie das zugeführte Reduktionsmittel umgewandelt werden. Dies gelingt durch einfache Steuerung oder Dosierung der Energiezufuhr und/oder der Menge der Reduktionsmittel.

Für die vorrichtungsgemässe Ausgestaltung von Anlagen zur Durchführung des erfindungsgemässen Verfahrens besteht weitgehend Freiheit für die Anordnung der Komponenten, da die Energiezufuhr nicht an eine bestimmte Stelle des Systems gebunden ist.

## Patentansprüche

1. Nicht-katalytisches Verfahren zur Umwandlung der in den Abgasen von Verbrennungsprozessen enthaltenen Stickstoffoxide (NO$_x$) in unschädliche Abgasbestandteile, wobei die Abgase mit einem Reduktionsmittel, vorzugsweise Ammoniak (NH$_3$), in einer Reaktionskammer gemischt werden und das Reduktionsmittel durch Zufuhr von Energie auf ein höheres Reaktionsniveau gebracht wird, dadurch gekennzeichnet, dass die Energie auf die Moleküle des Reduktionsmittels zur Einwirkung gebracht wird, bevor das Reduktionsmittel mit Abgas gemischt wird.

2. Verfahren nach Anspruch 1, dadurch gekennzeichnet, dass die Energie unmittelbar vor der Einführung des Reduktionsmittels in die Reaktionskammer auf die Moleküle des Reduktionsmittels zur Einwirkung gebracht wird.

3. Verfahren nach Anspruch 1 oder 2, dadurch gekennzeichnet, dass in einem Lösungsmittel (z.B. H$_2$O) gelöstes Reduktionsmittel verwendet wird.

4. Verfahren nach Anspruch 1 oder 2, dadurch gekennzeichnet, dass ein flüssiges Reduktionsmittel verwendet wird.

5. Verfahren nach Anspruch 1 oder 2, dadurch gekennzeichnet, dass ein gasförmiges Reduktionsmittel verwendet wird.

6. Verfahren nach einem der Ansprüche 1 bis 5, dadurch gekennzeichnet, dass als Reduktionsmittel Ammoniak (NH$_3$) oder Synthesegas (CO + H$_2$) oder Methan (CH$_4$) oder höhere Kohlenwasserstoffe (z.B. LPG) oder ein Gemisch dieser Reduktionsmittel verwendet wird.

7. Verfahren nach einem der Ansprüche 1 bis 6, dadurch gekennzeichnet, dass die Zufuhr der Energie durch Bestrahlung mittels von einem Laser emittiertem kohärenten Licht ausgeführt wird.

8. Verfahren nach einem der Ansprüche 1 bis 6, dadurch gekennzeichnet, dass die Zufuhr von Energie durch Bestrahlung mittels ionisierender Strahlung ausgeführt wird.

9. Verfahren nach Anspruch 7 oder 8, dadurch gekennzeichnet, dass die Strahlung grossflächig verteilt auf den der Reaktionskammer zuzuführenden Reduktionsmittelstrom zur Einwirkung gebracht wird.

## Revendications

1. Procédé non catalytique de transformation des oxydes d'azote (NO$_x$) contenus dans les produits de combustion en des constituants inoffensifs, les fumées étant mélangées dans une chambre de réaction avec un agent réducteur, de préférance avec de l'ammoniac (NH$_3$), dont le pouvoir réactif a été augmenté par un apport énergétique, caractérisé par le fait que ledit apport énergétique aux molécules de l'agent réducteur est fait avant que celui-ci ne soit mélangé avec lesidtes fumées.

2. Procédé selon la revendication 1, caractérisé par le fait qu ledit apport énergétique aux molécules de l'agent réducteur a lieu immédiatement avant l'introduction dudit agent réducteur dans la chambre de réaction.

3. Procédé selon l'une quelconque des revendications 1 ou 2, caractérisé par le fait que l'agent réducteur utilisé est dissous dans un solvant (par exemple dans l'eau).

4. Procédé selon l'une quelconque des revendications 1 ou 2, caractérisé par le fait que l'agent réducteur utilisé se présente sous forme liquide.

5. Procédé selon l'une quelconque des revendications 1 ou 2, caractérisé par le fait que l'agent réducteur utilisé se présente sous form gazeuse.

6. Procédé selon l'une quelconque des revendications 1 à 5, caractérisé par le fait que l'agent réducteur utilisé est constitué d'ammoniac (NH$_3$) ou d'un gaz de synthèse (CO + H$_2$) ou de méthane (CH$_4$) ou d'hydrocarbures supérieurs (par exemple de gaz de pétrole liquéfiés) ou d'un mélange des précédents.

7. Procédé selon l'une quelconque des revendications 1 à 6, caractérisé par le fait que l'apport énergétique se fait par exposition de l'agent réducteur à une lumière cohérente émise par un appareil laser.

8. Procédé selon l'une quelconque des revendications 1 à 6, caractérisé par le fait que l'apport énergétique se fait par exposition de l'agent réducteur à un rayonnement ionisant.

9. Procédé selon l'une quelconque des revendications 7 ou 8, caractérisé par le fait qu'une surface relativement large de l'agent réducteur s'écoulant vers la chambre de réaction est exposée audit rayonnement.

## Claims

1. A method for the non-catalytic conversion of oxides of nitrogen (NO$_x$) contained in products

of combustion into unharmful flue gas constituents, said products of combustion being mixed with a reducing agent, preferably ammoniac ($NH_3$), in a reaction chamber and the reactivity of said reducing agent being increased by causing energy to act on said reducing agent, characterized in that said energy is caused to act on the molecules of said reducing agent before mixing of said reducing agent and said products of combustion.

2. A method according to claim 1, characterized in that said energy is caused to act on said molecules of said reducing agent immediately prior to the entry of said reducing agent into said reaction chamber.

3. A method according to claim 1 or 2, characterized in that said reducing agent is dissolved in a solvent such as water ($H_2O$).

4. A method according to claim 1 or 2, characterized in that said reducing agent is liquid.

5. A method according to claim 1 or 2, characterized in that said reducing agent is gaseous.

6. A method according to any of claims 1 through 5, characterized in that said reducing agent is ammoniac ($NH_3$) or a synthesis gas (CO + $H_2$) or methane ($CH_4$) or higher hydrocarbons (such as liquefied petroleum gases) or a mixture of said substances.

7. A method according to any of claims 1 through 6, characterized in that said energy is transferred by the exposure of said reducing agent to a coherent light emitted by a laser device.

8. A method according to any of claims 1 through 6, characterized in that said energy is transferred by the exposure of said reducing agent to ionizing radiation.

9. A method according to claim 7 or 8, characterized in that a relatively large area of the reducing agent flowing to said reaction chamber is exposed to such radiation.